# EUROPÄISCHE PATENTSCHRIFT

(11) **EP 0 928 710 B1**
(45) Veröffentlichungstag und Bekanntmachung des Hinweises auf die Patenterteilung: **27.02.2008**
(21) Anmeldenummer: 99100155.3
(22) Anmeldetag: 07.01.1999
(51) Int. Cl.: B60J 7/04, B29C 45/16

(54) **Bewegbare Platte an einem Fahrzeugdach**
Movable plate for vehicle roof
Panneau mobile pour toit de véhicule automobile

(30) Priorität: 07.01.1998 DE 19800240
(43) Veröffentlichungstag der Anmeldung: 14.07.1999
(73) Patentinhaber: Webasto AG, 82131 Stockdorf (DE)
(72) Erfinder: Losert, Andreas, 82211 Herrsching (DE); Pätz, Werner, 86928 Hofstetten (DE)
(74) Vertreter: Wiese, Gerhard

(56) Entgegenhaltungen:
- DE-A- 3 425 104
- DE-C- 4 409 615
- DE-C- 4 439 766
- GB-A- 2 192 578

## Beschreibung

Die Erfindung bezieht sich auf eine bewegbare Platte an einem Fahrzeugdach mit einem aus einem Kunststoff bestehenden Platten-Grundkörper und mit wenigstens einem mit diesem verbundenen Funktionsteil gemäß dem Oberbegriff des Patentanspruchs 1 sowie ferner auf eine Vorrichtung sowie ein Verfahren zur Herstellung dieser Platte gemäß Anspruch 8 bzw. 9.

Bei einer bekannten bewegbaren Platte dieser Art (DE-C2 36 40 168) handelt es sich um einen Schiebedachdeckel, mit dem Mechanikkomponenten als Funktionsteile einstückig ausgebildet sind. Ein Nachteil der einstückigen Ausführung ist, daß unterschiedliche Anforderungen, z.B. in Bezug auf mechanische Fertigkeit oder optische Eigenschaften, die an die Platte und die Funktionsteile gestellt werden, nicht berücksichtigt werden können.

Aus der DE-C2 34 25 104 ist ein Sonnendach für Fahrzeuge bekannt, das einen starren Deckel aus lichtdurchlässigem Kunststoff aufweist. Um die Deckelplatte mit einer größeren Steifigkeit gegen thermische und mechanische Spannungen auszubilden, ist dieser mit randnahen Verstärkungsleisten versehen, die in einem Ausführungsbeispiel aus einem mit dem Kunststoff des Deckels verträglichen Kunststoff bestehen und mit diesem verklebt oder verschweißt sind. Als nachteilig ist hierbei der erhöhte Aufwand für das getrennte Herstellen, Handhaben und anschließende Verbinden von Platte und Verstärkungsleisten als Funktionsteile anzusehen. Hinzu kommt eine deutlich eingeschränkte Materialauswahl durch die Vorgabe der zum Verkleben oder Verschweißen notwendigen Materialverträglichkeit.

Aus der DE-C1 44 39 766 C1 sind Formteile aus Polyacetat bekannt, an die Funktionselemente aus einem oder mehreren Elastomeren direkt angeformt werden.

Aus der GB-A 2 192 578 ist eine Rohrkupplung bekannt, bei der zunächst eine Dichtfläche und anschließend eine Dichtmasse durch ein Spritzgießverfahren erzeugt wird.

Davon ausgehend liegt der Erfindung die Aufgabe zugrunde, eine bewegbare Platte der eingangs genannten Art zu schaffen, bei der Platten-Grundkörper und Funktionsteil durch entsprechende Materialauswahl an ihre jeweiligen, insbesondere mechanischen und optischen Anforderungen angepaßt werden können und bei der zur Verbindung von Platten-Grundkörper und Funktionsteil kein zusätzlicher Arbeitsschritt notwendig wird.

Diese Aufgabe wird erfindungsgemäß dadurch gelöst, daß wenigstens ein Funktionsteil aus einem vom Material des Platten-Grundkörpers abweichenden Material als integraler Bestandteil an der Platte in einem Mehrkomponenten-Verfahren angeformt ist wobei das Funktionsteil aus einem Kunststoff mit einer gegenüber dem Platten-Grundkörper abweichenden Lichtdurchlässigkeit besteht. Vorteilhafte Weiterbildungen des Erfindungsgegenstandes sind in den Unteransprüchen gekennzeichnet. Handelt es sich bei der bewegbaren Platte um den Deckel eines Schiebedaches, so wird der Platten-Grundkörper vorzugsweise aus Polycarbonat (PC) oder einem ähnlichen Kunststoff hergestellt, der durchsichtig oder wenig eingefärbt ist.

Handelt es sich bei der bewegbaren Platte um eine Windabweiserlamelle oder um eine Platte zur Abdeckung einer Fahrzeugöffnung, wie z.B. um ein Spoilerblatt, eine Heckklappe oder eine Seitenscheibe, so wird man den Platten-Grundkörper entsprechend den Anforderungen stärker einfärben. Für die Materialauswahl des Platten-Grundkörpers spielen mechanische und optische Anforderungen wie Temperaturbeständigkeit, Schwingungsdämpfungsverhalten und Schlagfestigkeit eine Rolle.

Die an den Platten-Grundkörper angeformten Funktionsteile bestehen aus einem vom Platten-Grundkörper abweichenden Material, das an die Aufgaben der Funktionsteile angepaßt ist. Hat das Funktionsteil lediglich die Aufgabe, als Sichtblende z.B. für Teile der Betätigungsmechanik zu dienen, so besteht die Materialabweichung zwischen Funktionsteil und Platten-Grundkörper lediglich im Grad der Lichtdurchlässigkeit. Übernimmt jedoch das Funktionsteil auch mechanische Aufgaben, wird sinnvollerweise für das Funktionsteil ein Kunststoff gewählt, der auf diese Aufgabe abgestimmt ist und der sich vom Kunststoff des Platten-Grundkörpers nicht nur in der Einfärbung, sondern auch in der Beimischung von Verstärkungsfasern z.B. Glas oder anderen geeigneten Materialien oder im Typ unterscheiden kann. So wird man für Funktionsteile, die eine Lagerungsaufgabe ausüben, einen gut geeigneten Lagerungswerkstoff wie z.B. Polyoxymethylen (POM) einsetzen. Funktionsteile, die zur Anbindung von Teilen einer Betätigungsmechanik der Platte dienen, werden aus einem Kunststoff mit guten Gleiteigenschaften angeformt; Funktionsteile, die als Innenblende zur Abdeckung eines Sichtspaltes dienen, bestehen vorzugsweise aus einem flexiblen Kunststoff.

Eine Ausführungsart der Erfindung sieht vor, den Platten-Grundkörper mit einer Aussparung zu versehen, in die das Funktionsteil wenigstens teilweise eingebracht ist.

Zur Unterstützung der Verbindung zwischen Platten-Grundkörper und Funktionsteil können Hinterschnitte wie z.B. Schwalbenschwanz- oder T-Nuten vorgesehen werden, die durch Ziehen von Werkzeugschiebern eines Mehrkomponenten-Spritzgießwerkzeuges im Herstellungsprozeß erzeugt werden. Die Verwendung von Hinterschnitten ist insbesondere dann sinnvoll, wenn für Platten-Grundkörper und Funktionsteile unterschiedliche Kunststofftypen eingesetzt werden, z.B. Polycarbonat (PC) für den Platten-Grundkörper und Polyoxymethylen (POM) oder Polyamid (PA) für die Funktionsteile.

Bei Verwendung des gleichen Kunststofftyps , z.B. Polycarbonat für Platten-Grundkörper und Funktionsteil kann die Aussparung bzw. der Hinterschnitt entfallen. Somit ist es möglich, für die Platte eine durchgehend einheitliche Materialdicke zu erreichen, so daß beim Abkühlen des Kunststoffs keine Einfallstellen im Bereich der Funktionsteile entstehen.

Bei der erfindungsgemäß ausgebildeten Vorrichtung zur Herstellung einer bewegbaren Platte der in den Ansprüchen 1 bis 8 angegebenen Art ist ein Formwerkzeug mit wenigstens zwei Formteilen vorgesehen.

Wenigstens eines der Formteile muß nach dem Spritzen einer ersten Kunststoffkomponente zum Spritzen den weiteren Kunststoffkomponenten, d.h. der Funktionsteile oder des Platten-Grundkörpers, durch ein Formteil ersetzt werden, welches das Volumen der weiteren Komponenten begrenzt.

Ein erfindungsgemäß ausgerichtetes Verfahren zur Herstellung einer bewegbaren Platte der in den Ansprüchen 1 bis 8 angegebenen Art umfaßt die folgenden Verfahrensschritte: In einem ersten Verfahrensschritt wird ein erster Kunststoffkörper gespritzt, indem in ein Formnest, das durch ein erstes Formteil (Unterform) und ein zweites Formteil (Oberform) gebildet wird, eine erste Kunststoffkomponente eingebracht wird. Dieser erste Körper kann das Funktionsteil oder der Platten-Grundkörper sein. Handelt es sich bei dem zuerst gespritzten Körper um den Platten-Grundkörper, so können untergeordnete Funktionsteile bereits im ersten Verfahrensschritt mitgespritzt werden. Anschließend wird ein Werkzeugschieber gezogen oder/und wenigstens eines der Formteile durch ein anderes Formteil ersetzt, wodurch sich das Formvolumen vergrößert. In die sich neu gebildeten Formvolumina bzw. Formnester werden dann die weiteren Künsfstöffkompönenten zur Formung des Platten-Grundkörpers bzw. der Funktionsteile eingebracht.

Nachfolgend sind vorteilhafte Ausführungsformen der Erfindung anhand der Zeichnungen näher erläutert. Es zeigen:
- Fig. 1: die Draufsicht auf ein Fahrzeug, wobei es sich bei der bewegbaren Platte um ein Schiebedach und ein Spoilerblatt handelt,
- Fig. 2: die Draufsicht auf ein Fahrzeug, wobei es sich bei der bewegbaren Platte um eine Lamelle eines Lamellendaches handelt,
- Fig. 3: den Teilquerschnitt durch den Rand der bewegbaren Platte gemäß Fig. 1 entlang der Linie III-III,
- Fig. 4: eine Variante zur Fig. 3,
- Fig. 5: den Teilquerschnitt durch den Rand der bewegbaren Platte gemäß Fig. 2 entlang der Linie V-V,
- Fig. 6 zum: eine Teil-Querschnittsdarstellung durch ein Spritzgießwerkzeug in einer Stellung Spritzen eines ersten Funktionsteils,
- Fig. 7: das Spritzgießwerkzeug von Fig. 6 in einer Stellung zum Spritzen des Platten-Grundkörpers sowie eines zweiten Funktionsteils,
- Fig. 8: die vergrößerte Darstellung des Bereiches VIII in Fig. 6,
- Fig. 9: die vergrößerte Darstellung des Bereiches IX in Fig. 7,
- Fig. 10: ein Spritzgießwerk zur Herstellung eines Funktionsteils gemäß Fig. 3,
- Fig. 11: das Spritzgießwerkzeug aus Fig. 10 mit geändertem Werkzeugoberteil zur Herstellung der Platte,
- Fig. 12: ein Spritzgießwerkzeug zur Herstellung eines Funktionsteils gemäß Fig. 4,
- Fig. 13: das Spritzgießwerkzeug gemäß Fig. 12 mit einem geänderten Werkzeugoberteil zur Herstellung der Platte und
- Fig. 14: ein Spritzgießwerkzeug zur Herstellung des Funktionsteils gemäß Fig. 5.

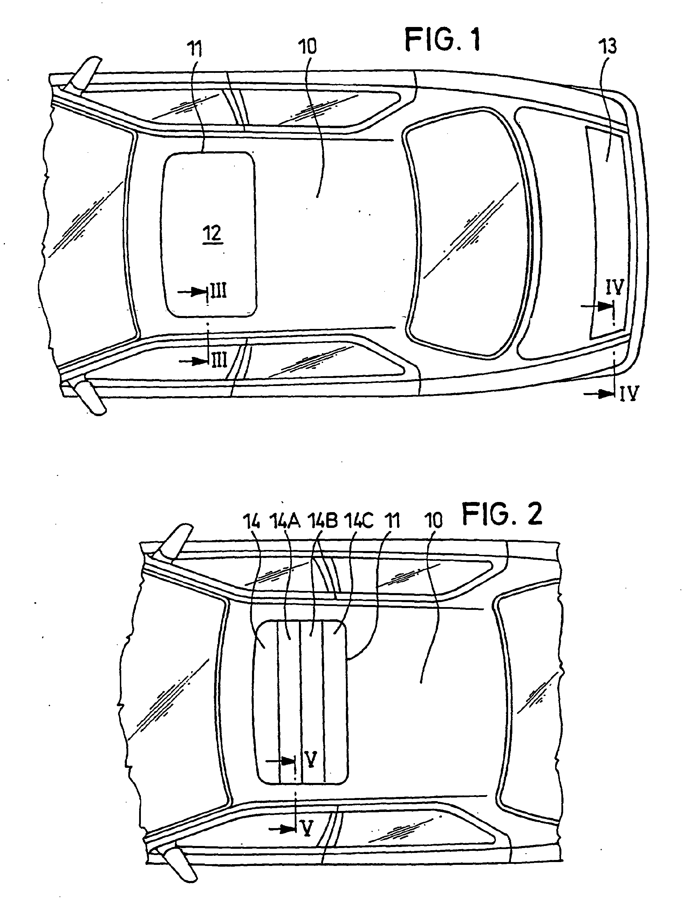

In Fig. 1 ist eine bewegbare Platte 12 dargestellt, die als Deckel eines Schiebedaches eine Dachöffnung 11 eines festen Daches 10 abdeckt. Die bewegbare Platte 13 ist eine Spoilerlamelle einer Spoilerkonstruktion.

Fig. 2 zeigt bewegbare Platten 14, 14A, 14B und 14C, die als Lamellen eines Lamellendaches die Dachöffnung 11 des festen Daches 10 abdecken.

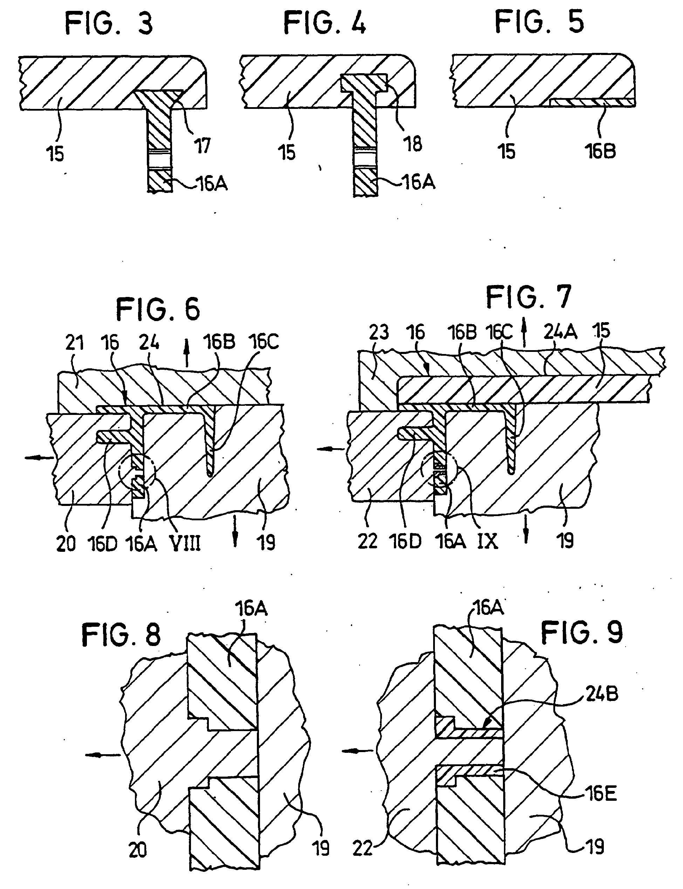

Fign. 3 und 4 zeigen einen Platten-Grundkörper 15 aus einer ersten Kunststoffkomponente, an dem ein Funktionsteil 16A aus einer zweiten Kunststoffkomponente angeformt ist. Da das Funktionsteil 16A zur Anbindung von Teilen der Betätigungsmechanik, beispielsweise einer Kulissenführung, an den Platten-Grundkörper 15 dient, werden an die Verbindungssicherheit zwischen Funktionsteil 16A und Platten-Grundkörper 15 hohe Anforderungen gestellt. Um auch bei unerschiedlichen Kunststofftypen, z.B. Polycarbonat (PC) für den Platten-Grundkörper 15 und Polyoxymethylen (POM) für das Funktionsteil 16A einen sicheren Zusammenhalt von angeformtem Funktionsteil und Platten-Grundkörper zu gewährleisten, verwendet man einen Hinterschnitt in Form eines Schwalbenschwanzes 17 oder einer T-Nut 18.

Bei dem in Fig. 5 gezeigten Funktionsteil handelt es sich um eine Sichtblende 16B, die aus einem dunkel eingefärbten Kunststoff besteht und die im Bereich einer Aussparung des Platten-Grundkörpers 15 angeförinf-ist.Fälls der Pläften-Gnzndkörper 15 aus durchsichtigem Kunststoff gespritzt ist, verhindert die Sichtblende 16B die Sicht auf unter der Blende liegende Mechanikkomponenten.

In Fig. 6 ist eine Teil-Querschnittsansicht durch ein Spritzgießwerkzeug in einer Stellung zum Spritzen eines ersten Funktionsteils 16 dargestellt.

Fig. 7 bis 9 zeigen das Spritzgießwerkzeug der Fig. 6 in einer Stellung zum Spritzen des Platten-Grundkörpers 15 sowie eines zweiten Funktionsteils 16E. Der Bereich VIII der Fig. 6 bzw. der Bereich IX der Fig. 7 sind in Fig. 8 bzw. 9 vergrößert dargestellt. Bei der bewegbaren Platte, bestehend aus Platten-Grundkörper 15 und Funktionsteil 16, handelt es sich in diesem Ausführungsbeispiel um den Deckel eines Schiebedaches. Der Platten-Grundkörper 15 ist somit eine Deckelplatte eines Schiebedaches, die aus einem schwach eingefärbten Kunststoff, beispielsweise aus Polycarbonat, besteht. Angeformt an die Deckelplatte 15 ist das insgesamt mit 16 bezeichnete Funktionsteil. Dieses weist einen Steg zur Mechanikanbindung, eine Sichtblende 16B, eine Innenblende 16C zur Abdeckung eines Sichtspaltes im Seitenbereich des Deckels sowie einen Steg 16D zur Aufnahme einer Dichtung, die den Schiebedachdeckel im geschlossenen Zustand gegen die Dachöffnung 11 abdichtet, auf. In dem Steg zur Mechanikanbindung befindet sich als weiteres Funktionsteil eine Lageraufnahme. Um zu verhindern, daß von außen durch die nur schwach eingefärbte Deckelplatte 15 auf Mechanikkomponenten gesehen werden kann, die sich unter dem Funktionsteil 16 befinden, wird die Sichtblende 16B dunkel eingefärbt. Die Lageraufnahme wird aus einem geeigneten Lagerwerkstoff, wie etwa Polyoxymethylen, an den Steg angeformt. Da die Deckelplatte 15 in einer einheitlichen Materialdicke ausgebildet ist, besteht keine Gefahr der Bildung von Einfallstellen beim Abkühlvorgang nach dem Spritzen.

Bei der in Fig. 6 dargestellten Stellung des Spritzgießwerkzeuges umgeben Formteile 19, 20 und 21 ein Formnest 24, in welches eine erste Kunststoffkomponente zur Formung des Funktionsteils 16 eingespritzt wird. Die Formteile 20 bzw. 21 werden nach dem Einspritzvorgang in der durch die Pfeile gekennzeichneten Richtung vom Spritzkörper weg bewegt, wodurch dieser teilweise entformt, jedoch vom Formteil 19 noch gehalten wird. Die dargestellte Position der Formteile und die Verwendung der Begriffe Oberform bzw. Unterform entspricht der späteren Gebrauchslage der Platte; zu Fertigungszwecken kann diese sinnvollerweise gerade umgekehrt sein.

Zum Spritzen des Platten-Grundkörpers 15 und der Lageraufnahme werden die Formteile 20 bzw. 21 durch die Formteile 22 bzw. 23 ersetzt. In das von den Formteilen 19 und 23 sowie vom Funktionsteil 16 begrenzte Formnest 24A wird Kunststoff zum Formen des Platten-Grundkörpers 15 eingebracht; in das durch die Formteile 19 und 22 sowie vom Steg des Funktionsteils 16 begrenzte Formnest 24B wird Kunststoff zur Bildung der Lageraufnahme eingespritzt. Nach dem Einspritzvorgang werden die Formteile 19, 22 und 23 in Pfeilrichtung bewegt, wodurch die bewegbare Platte zur Entformung freigegeben wird.

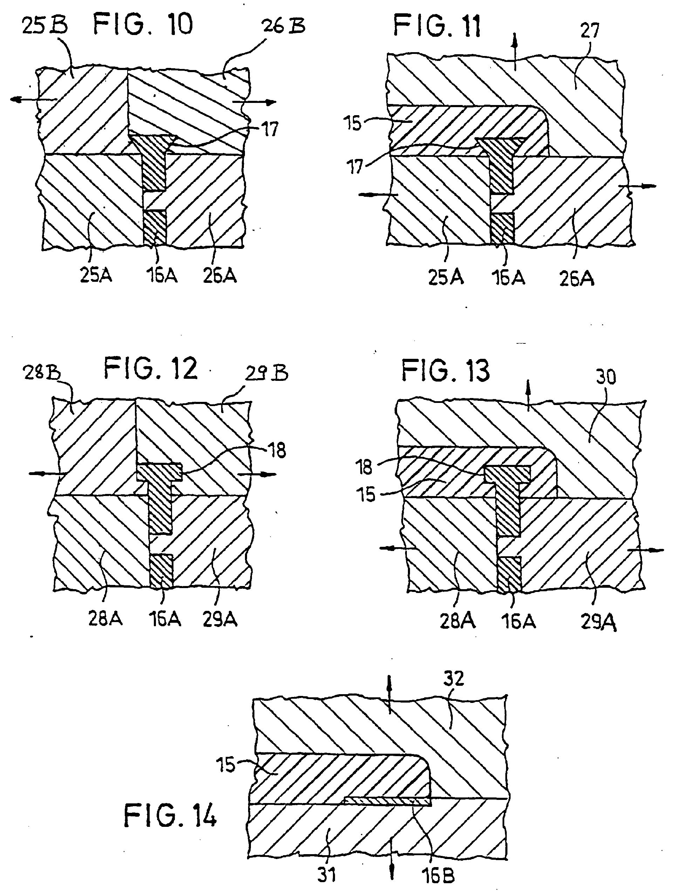

In Fig. 10 ist ein Spritzgießwerkzeug zur Herstellung einer Deckelplatte 15 mit einem Funktionsteil 16A gemäß Fig. 3 dargestellt. Dabei wird in einem ersten Spritzgang in einen Hohlraum, der von zwei unteren Formteilen 25A bzw. 26A und zwei oberen Formteilen 25B bzw. 26B begrenzt wird, ein Kunststoffmaterial zur Herstellung des Funktionsteils 16A eingespritzt. Anschließend werden die beiden oberen Formteile 25B bzw. 26B gemäß den nach außen weisenden Pfeilen in der Fig. 10 entfernt. An deren Stelle wird von oben her ein oberes Formteil 27 auf die beiden unteren Formteile 25 A und 26A aufgesetzt, welches als Hohlraum zur Umspritzung des schwalbenschwanzförmigen Formteils 17 mit dem Kunststoffmaterial für die Platte 15 dient. Nach Fertigstellung der Platte 15 werden alle drei Formwerkzeuge 25A, 26A und 27 entsprechend der Pfeilrichtungen der Fig. 11 entfernt.

In den Fig. 12 und 13 ist die Herstellung einer Platte mit einem Funktionsteil 16A gemäß Fig. 4 gezeigt. In einem ersten Arbeitsschritt wird in einen Hohlraum, der von zwei unteren Formhälften 28A bzw. 29A und zwei oberen Formhälften 28B bzw. 29B begrenzt wird, Kunststoffmaterial zur Ausbildung des Funktionsteils 16A eingespritzt. Nach dem Aushärten dieses Materials werden die beiden oberen Formhälften 28B bzw. 29B entsprechend der Pfeile in der Fig. 12 nach außen entfernt. Das Funktionsteil 16A wird dabei weiterhin von den unteren Formhälften 28A bzw. 29A gehalten.

In einem zweiten Arbeitsschritt wird statt der beiden oberen Formwerkzeuge 28B bzw. 29B ein oberes einteiliges Formwerkzeug 30 herangefahren, das einen Hohlraum entsprechend der Platte 15 aufweist, sodaß beim Einspritzen des Kunststoffmaterials zur Ausbildung der Platte 15 die T-förmige Halterung des Funtionsteils 16A formschlüssig umgeben wird.

Schließlich ist in Fig. 14 die Herstellung eines Funktionsteils 16B in Verbindung mit einer Platte 15 gemäß Fig. 5 erläutert. Das Funktionsteil 16B kann dabei als bereits fertiggestelltes Einlegeteil zwischen zwei Formhälften 31 bzw. 32 eingelegt und anschließend vom Kunststoffmaterial der Platte 15 durch Umspritzen umgeben werden. Gemäß einer weiteren nicht dargestellten Ausführungsform kann in einem ersten Arbeitsgang ein Schieber den auf das Funktionsteil 16B entfallenden Hohlraum verschließen, wobei dann zunächst die Platte 15 durch Spritzen hergestellt wird und nach dem Aushärten des Plattenmaterials der Schieber entfernt wird. Der vom Schieber freigegebene Hohlraum wird anschließend durch das Kunststoffmaterial zur Herstellung des Funtionsteils 16 B aufgefüllt.

### Bezugszeichenliste

- 10: Festes Fahrzeugdach
- 11: Dachöffnung
- 12: Bewegbare Platte (Deckel)
- 13: Bewegbare Platte (Spoilerblatt)
- 14: Bewegbare Platte (Lamelle)
- 14 A,B,C: Bewegbare Platten
- 15: Platten-Grundkörper
- 16: Funktionsteil
- 16A: Steg für Mechanikanbindung
- 16 B: Sichtblende
- 16 C: Innenblende
- 16 D: Steg
- 16 E: Lageraufnahme
- 17: Schwalbenschwanz-Hinterschnitt
- 18: T-Nut-Hinterschnitt
- 19 - 23: Formteile
- 24: Formnest bzw. Formvolumen des Funktionsteils 16
- 24 A: Formnest bzw. Formvolumen des Platten-Grundkörpers
- 24 B: Formnest bzw. Formvolumen des Funktionsteils 16E
- 25 - 32: Formteile

## Patentansprüche

1. Bewegbare Platte für ein Fahrzeugdach, mit einem aus einem Kunststoff bestehenden Platten-Grundkörper (15) und mit wenigstens einem mit diesem verbundenen Funktionsteil (16, 16A, 16E), das aus einem vom Material des Platten-Grundkörpers (15) abweichenden Material als integraler Bestandteil an der Platte (12, 13 bzw. 14) in einem Mehrkomponenten-Verfahren angeformt ist; **dadurch gekennzeichnet, daß** das Funktionsteil (16, 16A, 16 E) aus einem Kunststoff mit einer gegenüber dem Platten-Grundkörper (15) abweichenden Lichtdurchlässigkeit besteht.

2. Platte nach Anspruch 1, **dadurch gekennzeichnet, daß** der Platten-Grundkörper (15) eine einheitliche Stärke aufweist.

3. Platte nach Anspruch 1 oder 2, **dadurch gekennzeichnet, daß** der Platten-Grundkörper (15) eine Aussparung aufweist, in die das Funktionsteil (16) wenigstens teilweise eingebracht wird.

4. Platte nach Anspruch 3, **dadurch gekennzeichnet, daß** die Aussparung einen Hinterschnitt (Schwalbenschwanz 17 bzw. T-Nut 18) aufweist und daß das Material des Funktionsteils (16) von einem anderen Kunststofftyp ist als das des Platten-Grundkörpers (15).

5. Platte nach einem der vorhergehenden Ansprüche, **dadurch gekennzeichnet, daß** diese zur Abdeckung einer Fahrzeugdachöffnung verwendet wird.

6. Platte nach Anspruch 5, **dadurch gekennzeichnet, daß** das Funktionsteil (16 bzw. 16E) zur Anbindung von Teilen einer Betätigungsmechanik der Platte (12, 13 bzw. 14) dient, wobei zumindestens der Verbindungsbereich zur Betätigungsmechanik (Funktionsteil 16E) aus einem Kunststoff mit guten Gleiteigenschaften besteht.

7. Platte nach Anspruch 6, **dadurch gekennzeichnet, daß** das Funktionsteil als Innenblende (16C) zur Abdeckung eines Sichtspaltes dient, wobei zumindestens das freie Ende der Blende (16C) vorzugsweise aus einem flexiblen Kunststoff besteht.

8. Vorrichtung zur Herstellung einer Platte nach einem der Ansprüche 1 bis 7, **dadurch gekennzeichnet, daß** ein Formwerkzeug mit wenigstens zwei Formteilen (19, 20, 21, 22 bzw. 23) vorgesehen ist, von denen wenigstens eines zur Herstellung des Funktionsteils (16) bzw. des Platten-Grundkörpers (15) durch ein das Volumen der zweiten Komponente begrenzendes anderes Formteil (22 bzw. 23) ersetzt wird.

9. Verfahren zur Herstellung einer Platte nach einem der Ansprüche 1 bis 7, **gekennzeichnet durch** folgende Verfahrensschritte:
a) in ein erstes Formteil (19 bzw. 20) und ein dieses begrenzendes zweites Formteil (21) wird ein Kunststoff zur Formung des Funktionsteils (16A) eingebracht ,
b) ein Schieber wird entfernt oder wenigstens eines der Formteile (20 bzw. 21) durch ein anderes Formteil (22 bzw. 23) mit einem größerem Formvolumen (Formnest 24A bzw. 24B) ersetzt,
c) in die **durch** das andere Formteil begrenzten Formvolumina (Formnest 24A) wird ein Kunststoff zur Formung des Platten-Grundkörpers (15) eingebracht.

## Claims

1. Movable plate for a vehicle roof, having a basic plate body (15) consisting of a plastic and having at least one functional part (16, 16A, 16E) connected to the latter, which is integrally moulded on the plate (12, 13 or 14) from a material differing from the material of the basic plate body (15) as an integral constituent part in a multi-component process, **characterized in that** the functional part (16, 16A, 16E) consists of a plastic with a translucency differing from the basic plate body (15).

2. Plate according to Claim 1, **characterized in that** the basic plate body (15) has a uniform thickness.

3. Plate according to Claim 1 or 2, **characterized in that** the basic plate body (15) has a recess, into which the functional part (16) is at least partly introduced.

4. Plate according to Claim 3, **characterized in that** the recess has an undercut (dovetail 17 or T-shaped groove 18), and **in that** the material of the functional part (16) is of a different type of plastic from that of the basic plate body (15).

5. Plate according to one of the preceding claims, **characterized in that** it is used to cover a vehicle opening.

6. Plate according to Claim 5, **characterized in that** the functional part (16 or 16E) is used for the attachment of parts of an actuating mechanism of the plate (12, 13 or 14), at least the connecting region to the actuating mechanism (functional part 16E) consisting of a plastic with good lubricating properties.

7. Plate according to Claim 6, **characterized in that** the functional part is used as an inner screen (16C) for covering a visible gap, at least the free end of the screen (16C) preferably consisting of a flexible plastic.

8. Apparatus for the production of a plate according to one of Claims 1 to 7, **characterized in that** a mould having at least two mould parts (19, 20, 2 1, 22 and 23) is provided, of which at least one for the production of the functional part (16) or of the basic plate body (15) is replaced by another mould part (22 or 23) limiting the volume of the second component.

9. Process for the production of a plate according to one of Claims 1 to 7, **characterized by** the following process steps:
a) a plastic for forming the functional part (16A) is introduced into a first mould part (19 or 20) and a second mould part (21) bounding the latter,
b) a slide is removed or at least one mould part (20 or 21) is replaced by another mould part (22 or 23) having a larger mould volume (mould cavity 24A or 24B),
c) a plastic for forming the basic plate body (15) is introduced into the mould volume (mould cavity 24A) limited by the other mould part.

## Revendications

1. Panneau mobile pour un toit de véhicule, avec un corps de base de panneau (15) réalisé dans une matière plastique et avec au moins une pièce fonctionnelle (16, 16A, 16E) reliée à celui-ci, qui est formée à partir d'un matériau différent du matériau du corps de base de panneau (15) en tant que partie intégrante sur le panneau (12, 13 ou 14) selon un procédé à plusieurs composants, **caractérisé en ce que** la pièce fonctionnelle (16, 16A, 16E) est réalisée dans une matière plastique possédant une transparence différente de celle du corps de base de panneau (15).

2. Panneau selon la revendication 1, **caractérisé en ce que** le corps de base de panneau (15) présente une épaisseur uniforme.

3. Panneau selon la revendication 1 ou 2, **caractérisé en ce que** le corps de base de panneau (15) présente un évidement dans lequel la pièce fonctionnelle (16) est au moins en partie introduite.

4. Panneau selon la revendication 3, **caractérisé en ce que** l'évidement présente une contre-dépouille (queue d'aronde 17 ou rainure en T 18) et que le matériau de la pièce fonctionnelle (16) est d'un autre type de matière plastique que celui du corps de base de panneau (15).

5. Panneau selon l'une des revendications précédentes, **caractérisé en ce que** celui-ci sert à couvrir une ouverture de toit de véhicule.

6. Panneau selon la revendication 5, **caractérisé en ce que** la pièce fonctionnelle (16 ou 16E) sert à relier les pièces d'un mécanisme d'actionnement du panneau (12, 13 ou 14), au moins la zone de liaison avec le mécanisme d'actionnement (pièce fonctionnelle 16E) étant réalisée dans une matière plastique ayant de bonnes propriétés de glissement.

7. Panneau selon la revendication 6, **caractérisé en ce que** la pièce fonctionnelle sert de cache intérieur pour couvrir une fente apparente, au moins l'extrémité libre du cache (16C) étant de préférence réalisée dans une matière plastique souple.

8. Dispositif pour fabriquer un panneau selon l'une des revendications 1 à 7, **caractérisé en ce qu'**il est prévu un moule comprenant au moins deux parties de moule (19, 20. 21, 22 ou 23) dont, pour la fabrication de la pièce fonctionnelle (16) ou du corps de base de panneau (15), au moins une est remplacée par une autre partie de moule (22 ou 23) délimitant le volume du deuxième composant.

9. Procédé pour fabriquer un panneau selon l'une des revendications 1 à 7, **caractérisé par** les étapes de procédé suivantes :
a) une matière plastique destinée à former la pièce fonctionnelle (16) est introduite dans une première partie de moule (19 ou 20) et une deuxième partie de moule (21) délimitant la première,
b) une coulisse est enlevée ou au moins une des parties de moule (20 ou 21) est remplacée par une autre partie de moule (22 ou 23) ayant un plus grand volume de moulage (cavité de moule 24A ou 24B),
c) une matière plastique destinée à former le corps de base de panneau (15) est introduite dans le volume de moulage (cavité de moule 24A) délimite par l'autre partie de moule.
